# FASCICULE DE BREVET EUROPEEN

(11) **EP 1 264 370 B1**
(45) Date de publication et mention de la délivrance du brevet: **09.12.2009**
(21) Numéro de dépôt: 01994920.5
(22) Date de dépôt: 20.12.2001
(51) Int. Cl.: H01R 39/38, H02K 5/14

(54) **ENSEMBLE PORTE-BALAIS POUR MACHINE ELECTRIQUE**
BÜRSTENHALTERBAUGRUPPE FÜR ELEKTRISCHE MASCHINE
BRUSH-HOLDER ASSEMBLY FOR ELECTRIC MACHINE

(30) Priorité: 21.12.2000 FR 0016737; 27.04.2001 FR 0105770; 27.04.2001 FR 0105771
(43) Date de publication de la demande: 11.12.2002
(73) Titulaire: VALEO EQUIPEMENTS ELECTRIQUES MOTEUR, 94017 Créteil (FR)
(72) Inventeur: VACHERON, Xavier, F-69003 Lyon (FR); IZQUIERDO, José, F-38090 Villefontaine (FR); PERARD, Sébastien, F-69003 Lyon (FR); ROUILLARD, Yann, F-69003 Lyon (FR)
(74) Mandataire: Gamonal, Didier
(86) Numéro de dépôt international: PCT/FR2001/004086
(87) Numéro de publication internationale: WO 2002/050962

(56) Documents cités:
- EP-A- 0 484 287
- US-A- 4 475 053
- US-A- 5 148 072
- US-A- 5 444 320

## Description

### Domaine de l'invention

La présente invention concerne un ensemble porte-balais pour machine électrique, notamment pour démarreur de véhicule automobile ainsi qu'un procédé d'assemblage d'une machine électrique pourvue d'un tel ensemble et une machine électrique présentant un tel ensemble.

### Etat de la technique

Selon une configuration connue, un ensemble porte-balais comporte essentiellement un ensemble de cages de raccordement électrique des balais, une plaque de support en matériau électriquement conducteur sur laquelle sont fixées les cages, le cas échéant avec interposition d'une plaquette électriquement isolante, pour ce qui concerne les cages destinées à être raccordées à une source d'alimentation en courant, et un capot métallique formant palier sur lequel est montée la plaque de support et les cages qu'elle porte.

L'ensemble ainsi réalisé vient se monter sur la carcasse de la machine électrique.

Classiquement, la plaque de support des cages de balai vient se monter par vissage sur le capot, les vis utilisées assurant, d'une part, la fixation mécanique de la plaque de support sur le capot et, d'autre part, son raccordement à la masse.

Cette technique de montage présente un inconvénient majeur, dans la mesure où la réalisation de ce type d'ensemble porte-balais est relativement difficile à automatiser dans des chaînes de fabrication et où l'utilisation de vis est susceptible d'engendrer des défauts de montage, dus par exemple à un défaut de serrage des vis, ou à une altération du filetage de l'une des vis.

Selon une variante de cette technique, par exemple décrite dans WO 00/51209, le support des cages de balai est fixé au moyen de rivets sur le capot. L'utilisation de rivets rend également l'assemblage difficilement automatisable dans des chaînes de fabrication.

Une autre technique de montage consiste à fixer la plaque de support par coincement de cette dernière entre le capot et une culasse de la machine. On effectue ainsi directement le raccordement à la masse de la plaque de support. Toutefois, cette technique occasionne des problèmes d'étanchéité à l'eau dans la mesure où les zones de jonction entre la plaque de support et la culasse d'une part, et la plaque de support et le capot, d'autre part, constituent des interfaces augmentant les risques de pénétration d'eau.

Outre les inconvénients précités, ces techniques nécessitent l'utilisation de pièces d'interface spécifiques pour la fixation et le raccordement des balais de retour de courant, ce qui réduit sensiblement les performances électriques de l'ensemble porte-balais, engendre une augmentation des coûts de fabrication et rend plus complexe l'automatisation de la fabrication.

Une autre technique connue consiste à fixer les cages de raccordement électrique des balais directement sur le capot formant palier, le cas échéant avec interposition de plaquettes électriquement isolantes. La fixation des cages sur le capot s'effectue cependant au moyen de rivets qui rendent l'assemblage de l'ensemble difficile à automatiser.

### Objet de l'invention

Au vu de ce qui précède, le but de l'invention est de pallier les inconvénients de l'état de la technique et de fournir un ensemble porte-balais pour machine électrique dont l'assemblage est aisément automatisable dans une chaîne de fabrication, et ce avec un coût réduit, et comportant en outre une étanchéité à l'eau accrue.

L'invention a donc pour objet un ensemble porte-balais pour machine électrique, comprenant un capot métallique formant palier destiné à être monté sur une carcasse de la machine et un ensemble d'organes de raccordement électrique des balais montés sur le capot au moyen de rivets qui comportent chacun au moins une tige s'étendant à partir de l'une des pièces constituées par le capot et l'un desdits organes, traversant un orifice pratiqué dans l'autre pièce et rabattu contre cette dernière, essentiellement caractérisé en ce que ladite tige est venue de matière avec la pièce à partir de laquelle elle s'étend et comporte une base obturée.

Ainsi, les cages de raccordement électrique des balais sont directement montées sur le capot, qui a ainsi une double fonction, ce qui diminue le nombre de pièces, simplifie et améliore le raccordement à la masse des balais de retour de courant. En outre, l'utilisation de rivets intégrés soit aux cages soit au capot simplifie grandement l'opération de montage et rend cette dernière aisément automatisable. Enfin, l'utilisation d'un rivet à base obturée permet d'obtenir une bonne étanchéité à l'eau.

Cet ensemble porte-balais peut également comporter une ou plusieurs des caractéristiques suivantes, prises isolément ou selon toutes les combinaisons techniquement possibles :
- ladite tige est une tige creuse ;
- la tige est constituée par une partie extrudée de la pièce à partir de laquelle elle s'étend ;
- une partie des organes de réception et de raccordement électrique desdits balais sont constitués par des cages de guidage électriquement conductrices adaptées pour recevoir un balai respectif et fixées sur le capot au moyen desdits rivets ;
- le ou chaque rivet est venu de matière avec le capot ;
- le ou chaque rivet est venu de matière avec la cage de guidage ;
- une partie des organes de réception et de raccordement électrique desdits balais sont constitués par des cages de guidage électriquement conductrices adaptées pour recevoir un balai respectif et soudées sur le capot.
- au moins une partie des organes de guidage et de raccordement électrique desdits balais comportent des cages de guidage électriquement conductrice adaptées pour recevoir des balais respectifs, chaque cage de guidage étant solidaire d'une plaquette en matériau électriquement isolant fixée sur le capot au moyen desdits rivets ;
- chaque cage de guidage est rivetée sur la plaquette isolante ;
- le ou chaque rivet est venu de matière avec la plaquette ;
- le ou chaque rivet est venu de matière avec le capot ;
- les cages de guidage sont pourvues intérieurement de moyens élastiques sollicitant, en fonctionnement, les balais radialement en appui contre un collecteur de la machine électrique, un organe formant butée de limitation du déplacement radial des balais en l'absence de collecteur étant en outre prévu ;
- l'organe de limitation du déplacement radial des balais comporte une rondelle interposée entre les balais, sur la paroi périphérique de laquelle les balais viennent prendre appui et dont le diamètre externe est sensiblement supérieur à celui du collecteur ;
- la rondelle est raccordée au capot métallique par des moyens frangibles adaptés pour être rompus par le collecteur au cours de son insertion entre les balais.
- le capot est pourvu d'un logement de réception de la rondelle après rupture des moyens frangibles.
- les dimensions de la rondelle sont adaptées pour obtenir un montage serré de cette dernière sur le capot, au moins lorsqu'elle se situe dans le logement.

Dans une forme de réalisation le capot présente deux surélévations pour la fixation et le support d'une plaquette électriquement isolante portant les cages de guidage.

Un dégagement est ainsi réalisé entre les deux surélévations ce qui permet de réaliser un espace de ventilation entre la plaquette électriquement isolante et le capot. En outre cela permet de monter par avance les cages de guidage sur la plaquette.

Dans une forme de réalisation chaque surélévation présente une zone centrale et deux zones latérales, de moindre étendue radiale que la zone centrale, s'étendant de part et d'autre de la zone centrale.

Grâce à cette disposition il est possible de fixer par rivetage sur la plaquette isolante les cages destinées à être reliées à une borne d'alimentation positive.

En effet la différence de taille radiale des zones latérales permet d'implanter les rivets de fixation des cages précitées sans que ceux-ci soient en contact avec le capot.

Ces rivets sont alors montés au niveau du dégagement entre les deux surélévations. Ces zones latérales délimitent ce dégagement et permettent grâce à leur forme l'implantation des rivets de fixation de ces cages dans le dégagement entre les deux surélévations, s'étendant par définition en saillie par rapport aux restes du capot. Ces surélévations sont des protubérances.

Pour optimiser le dégagement les surélévations ont globalement une forme de croissant avec deux zones latérales se raccordant à la périphérie externe de la zone centrale.

La périphérie externe des zones latérales prolonge avantageusement la périphérie externe de la zone centrale en sorte que la périphérie externe des surélévations constitue dans une forme de réalisation une zone de centrage pour le capot en vue de son montage à la manière d'un couvercle par exemple dans la carcasse ou culasse de la machine tournante.

L'invention a également pour objet un procédé d'assemblage d'une machine électrique pourvue d'un ensemble porte-balais tel que défini ci-dessus, caractérisé en ce qu'il comporte les étapes consistant à riveter les organes de raccordement électrique des balais sur le capot, insérer les moyens élastiques dans les cages de guidage, positionner les balais dans les cages de guidage en appui contre les moyens élastique, insérer l'organe de limitation du déplacement radial des balais, et positionner l'ensemble porte-balais ainsi réalisé autour du collecteur de la machine de sorte que ce dernier exerce une poussée sur l'organe de limitation du déplacement des balais telle que ces derniers soient libérés dudit organe.

Avantageusement le collecteur présente à sa périphérie interne une collerette axialement saillante de forme arrondie, tel qu'un godron, pour agir sur la périphérie interne de l'organe de limitation du déplacement des balais, afin que celui-ci ne se mette pas en biais.

Dans une forme de réalisation cet organe est une rondelle venant se serrer sur la périphérie interne d'une douille d'orientation axiale solidaire, par exemple par soudage, du capot.

Cette collerette permet de freiner l'arbre d'induit de la machine électrique.

Avantageusement un jeu axial existe après montage entre le capot et l'organe de limitation du débattement des balais.

Dans tous les cas le capot est un capot multifonctions et est avantageusement en tôle pour réaliser de manière simple et économique ces fonctions, sachant que les surélévations rigidifient le capot, qui ainsi peut être de faible épaisseur.

### Description des dessins

D'autres buts, caractéristiques et avantages ressortiront de la description suivante, donnée uniquement à titre d'exemple non limitatif, et faite en référence aux dessins annexés sur lesquels :
- la figure 1 est une vue en perspective d'une plaque de support de cages de raccordement électrique de balais d'un ensemble porte-balais selon l'état de la technique ;
- la figure 2 est une vue en perspective d'un capot de l'ensemble porte-balais correspondant à la plaque de support représentée sur la figure 1, sur lequel cette dernière vient se fixer;
- la figure 3 est une vue en perspective d'un ensemble porte-balais conforme à l'invention ;
- la figure 4 est une vue en coupe d'une partie du capot formant palier de l'ensemble de la figure 3, avant assemblage ;
- la figure 5 montre le capot de la figure 4 après montage d'une plaquette isolante ;
- la figure 6 est une vue partielle en coupe selon la ligne VI-VI de l'ensemble porte-balais de la figure 3 ;
- la figure 7 est une vue partielle en coupe selon la ligne VII-VII de l'ensemble porte-balais de la figure 3 ;
- la figure 8 illustre un autre mode de réalisation d'un ensemble porte-balais selon l'invention ; et
- la figure 9 est une vue partielle en coupe selon la ligne IX-IX de l'ensemble porte-balais de la figure 8.
- la figure 10 est une vue partielle en coupe d'un autre exemple de réalisation d'un ensemble porte-balais conforme à l'invention, montrant le collecteur de la machine destiné à s'insérer entre les balais ;
- la figure 11 illustre l'ensemble porte-balais de la figure 10 en cours d'insertion du collecteur entre les balais ; et
- la figure 12 montre l'ensemble porte-balais des figures 10 et 11 après insertion complète du collecteur de la machine entre les balais ;
- la figure 13 est une vue de face du porte-balais pour un troisième exemple de réalisation ;
- la figure 14 est une vue en perspective du capot de la figure 13 ;
- la figure 15 est une vue en perspective du passe-fil ;
- la figure 16 est une vue en perspective de la plaquette isolante ;
- la figure 17 est une vue en coupe axiale selon la ligne 17-17 de la figure 13 ;
- la figure 18 est une vue en perspective d'un capuchon d'isolation d'une cage de guidage ;
- la figure 19 est une vue en perspective d'une cage de guidage ;
- la figure 20 est une vue partielle en coupe montrant après montage la position de l'organe de limitation du déplacement des balais ;
- la figure 21 est une vue analogue à la figure 13 pour un autre exemple de réalisation ;
- la figure 22 est une vue partielle en coupe axiale montrant la partie centrale du capot avec sa douille pour un autre exemple de réalisation.

### Description des modes préférentiels de réalisation de l'invention

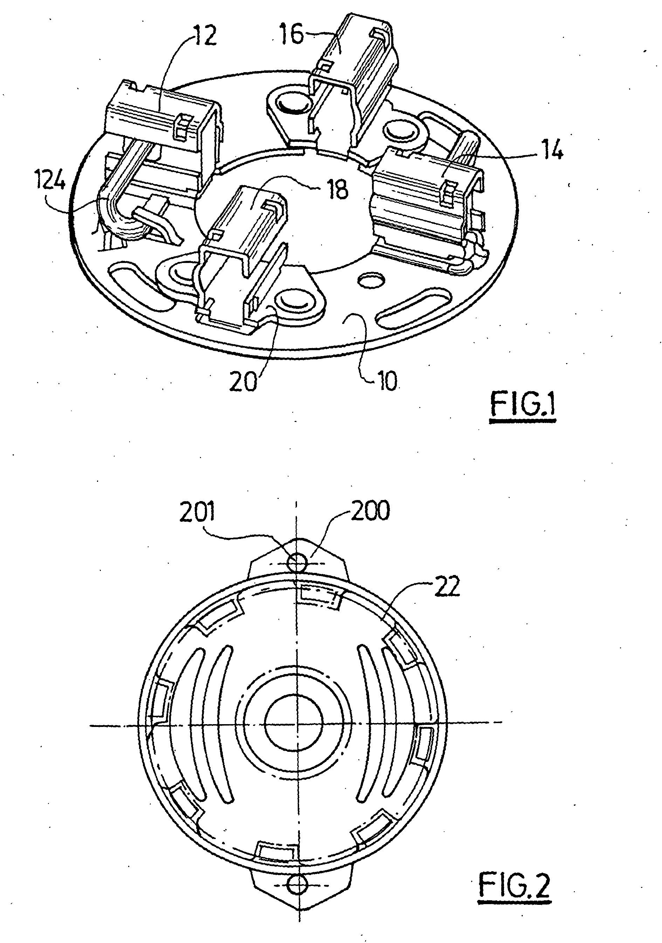

En référence aux figures 1 et 2, on va tout d'abord décrire un ensemble porte-balais selon l'état de la technique, pour démarreur de véhicule automobile.

Cet ensemble porte-balais comporte essentiellement une plaque de support 10 métallique, visible sur la figure 1, sur laquelle sont fixés un ensemble de cages électriquement conductrices de raccordement de balais 12, 14, 16 et 18, avec interposition d'une plaquette, telle que 20, en matériau électriquement isolant, et un capot 22 formant palier arrière, visible sur la figure 2, sur lequel viennent se fixer la plaque de support 10 et les cages 12, 14, 16 et 18 qu'elle porte. Le capot 22, comme visible sur la figure 2, comporte par exemple deux oreilles 200, traversées chacune par un trou 201 pour le passage de tirants (non représentés) vissés sur le palier avant du démarreur comme décrit par exemple dans le document FR-A-2 796 990. Le palier avant du démarreur porte le pignon du lanceur d'une manière connue en soi, comme par exemple dans les documents FR-A-2, 783,090 et FR-A-2 796 990.

Deux des cages, à savoir les cages désignées par les références numériques 12 et 14, destinées à recevoir des balais de retour de courant, sont raccordées à la plaque de support 10 au moyen de conducteurs 124 appropriés.

La plaque de support 10 est fixée par vissage sur le capot 22 formant palier.

Les vis utilisées pour la fixation de la plaque de support 10 sur le capot 22 assurent, d'une part, la fixation mécanique de la plaque 10 sur ce dernier et, d'autre part, son raccordement électrique à la masse.

Toutefois, et comme indiqué précédemment, l'utilisation de telles vis rend l'assemblage de l'ensemble porte-balais difficilement automatisable dans des lignes de fabrication automatisées et est susceptible d'engendrer des défauts de montage.

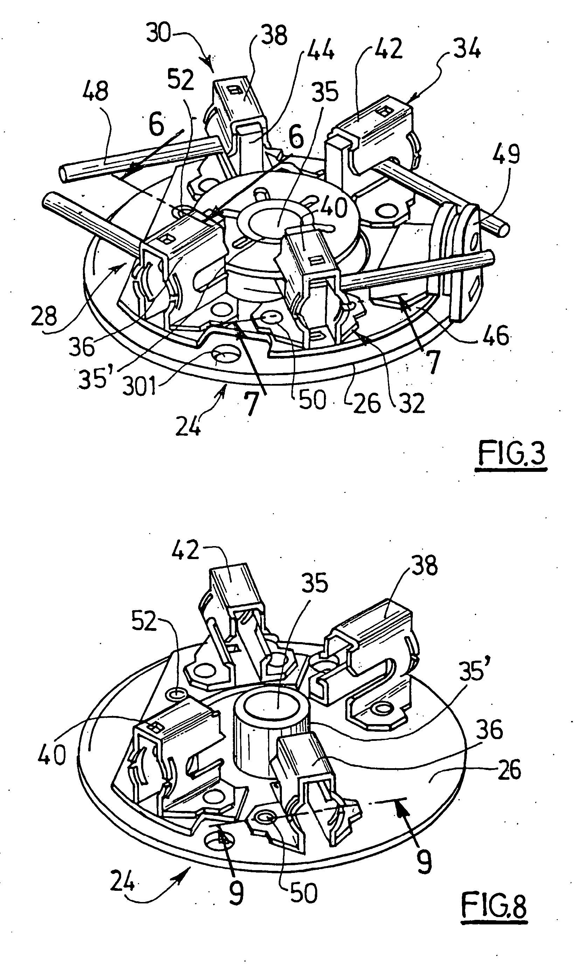

On va décrire en référence aux figures 3 à 7, un premier exemple de réalisation d'un ensemble porte-balais selon l'invention, permettant de pallier ces inconvénients.

Cet ensemble porte-balais, désigné par la référence numérique générale 24, est destiné à être monté sur une carcasse d'une machine électrique constituée par un démarreur de véhicule automobile.

En se référant tout d'abord à la figure 3, l'ensemble porte-balais 24 comporte essentiellement un capot métallique 26 formant le palier arrière de la machine électrique, et un ensemble d'organes 28, 30, 32 et 34 de raccordement électrique des balais, fixés sur le capot 26 au moyen de rivets.

De façon connue en soi par exemple par le document FR-A-2 796 990, le capot 26 formant palier est pourvu d'une alvéole centrale 35 non débouchante dans laquelle est destiné à tourillonner l'arbre d'induit de la machine électrique.

Cette alvéole est délimitée par une douille 35' d'orientation axiale décrite ci-après.

Dans l'exemple de réalisation visible sur cette figure, les organes de raccordement électriques des balais comportent un ensemble de cages de guidage 36, 38, 40 et 42 électriquement conductrice destinées chacune à recevoir et à guider un balai, tel que 44, et une plaquette électriquement isolante 46, réalisée à partir d'un matériau approprié pour l'utilisation envisagée, par exemple, un matériau moulable, tel qu'une matière plastique.

Les cages de guidage sont ici métalliques en étant ici en tôle pré-cuivrée en sorte que la solution est simple et économique.

Comme cela est classique, les balais 44 sont destinés à venir en contact avec des pistes collectrices d'un collecteur ou commutateur axial que présente la machine électrique, un organe élastiquement déformable, placé dans les cages 36, 38, 40 et 42 sollicitant les balais radialement en appui contre les pistes collectrices.

Les pistes collectrices sont d'orientation axiale et les balais 44 d'orientation radiale pour réduire l'encombrement axial de la machine électrique.

Une partie des cages, à savoir les deux cages désignées par les références numériques 36 et 38, sont destinées à recevoir des balais négatifs ou de retour de courant, les autres cages, à savoir les cages désignées par les références numériques 40 et 42, étant destinées à recevoir les balais d'alimentation en courant.

Ces balais sont reliés électriquement dans le cas d'un démarreur à l'une des bornes d'alimentation du contacteur électromagnétique du démarreur.

Ainsi, des câbles électriquement conducteurs, tels que des tresses en cuivre 48, permettent, d'une part, l'alimentation de deux des balais d'alimentation en courant, par l'intermédiaire d'un passe-fil 49 destiné à traverser la carcasse de la machine électrique pour assurer la connexion de ces balais à une borne d'alimentation positive et, d'autre part, le raccordement à la masse des balais 44 de retour de courant par raccordement des câbles correspondants, par exemple par soudage, au capot 26.

Comme cela sera décrit en détails par la suite, une rondelle 64 formant un faux collecteur permet le montage de l'ensemble porte-balais en repoussant les balais vers la périphérie externe.

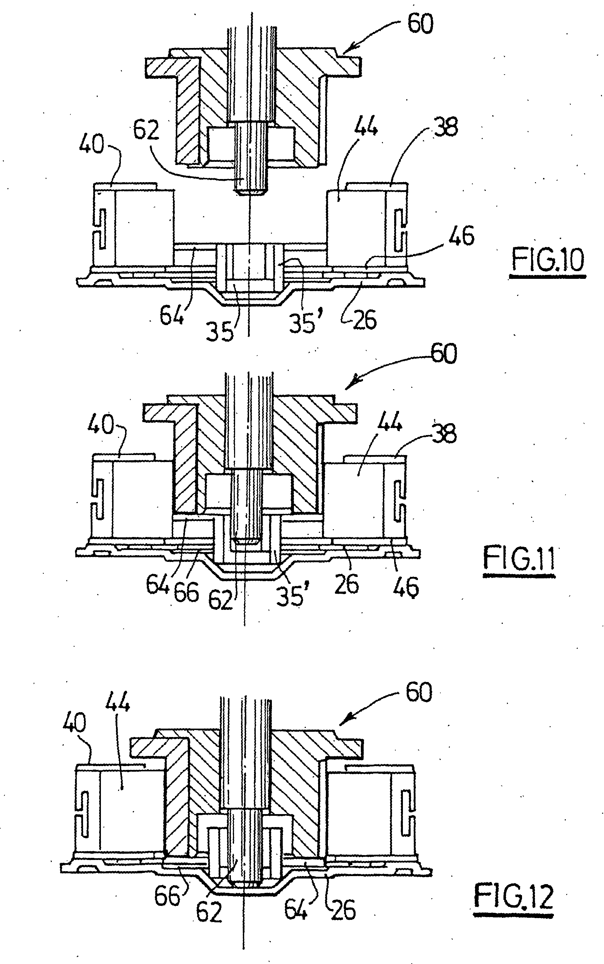

Au moins deux orifices 301, réalisés à travers le capot métallique 26 permettent le passage de tirants, pour la fixation du capot. Dans ce cas, les tirants passent entre les aimants qui sont fixés à l'intérieur de la carcasse pour former l'inducteur. Ces tirants sont vissés dans des taraudages réalisés par exemple dans le palier avant du démarreur portant l'extrémité avant de l'arbre d'induit, dont l'extrémité arrière est visible dans les figures 10 à 12 et 20.

Les tirants passent ici à l'intérieur de la carcasse, classiquement de forme cylindrique et métallique que présente la machine comme visible par exemple dans le document FR-A-2 2 796 990. C'est via cette carcasse qu'est assuré le retour à la masse.

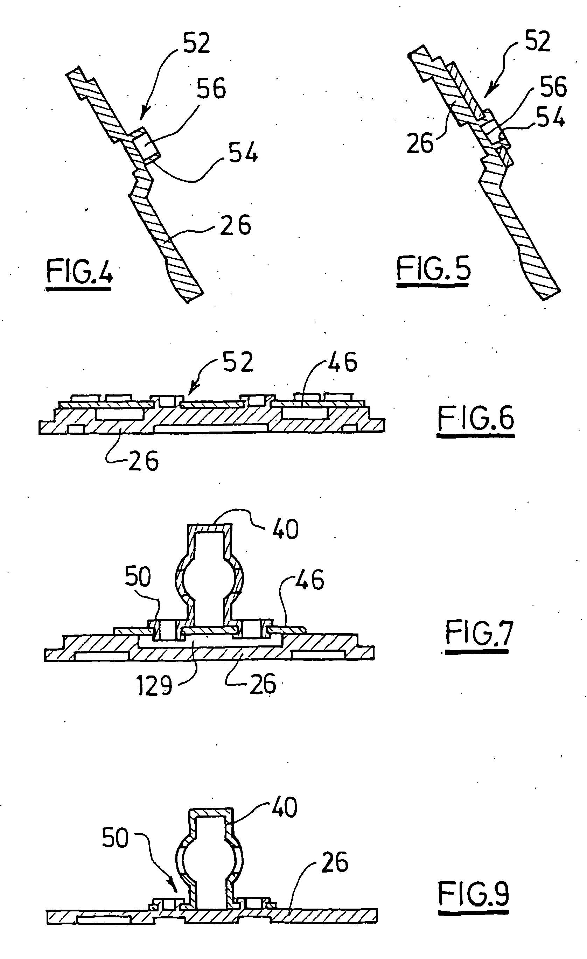

En se référant également aux figures 4 à 7, les cages de guidage 36, 38, 40 et 42 sont fixées sur la plaquette isolante 46 au moyen de rivets, tels que 50.

La plaquette isolante 46 est, quant à elle, fixée sur le capot 26 formant palier au moyen de rivets 52.

Comme représenté sur les figures 4 à 6, selon une caractéristique de l'invention, les rivets 52 utilisés pour la fixation de la plaquette 46 sur le capot 26 se présentent chacun sous la forme d'une tige creuse 54 venue de matière avec le capot 26 pour ne pas détériorer l'étanchéité de celui-ci.

La tige creuse 54 est réalisée par extrusion au cours de la fabrication du capot 26, par frappe de ce dernier contre l'empreinte d'un moule femelle de manière à réaliser, lors du démoulage, une tige 54 en forme de collerette venue de matière avec le capot 26 et s'étendant en saillie à partir de l'une de ses grandes faces.

Comme on le voit sur ces figures, la tige 54 du rivet 52 comporte un fond 56 obturé par la matière du capot 26.

Pour la solidarisation de la plaquette isolante 46 et du capot 26, la tige 54 de chaque rivet 52 traverse un orifice pratiqué dans la plaque isolante 46 et est rabattu, par son extrémité libre, contre cette dernière.

Dans l'exemple de réalisation décrit en référence aux figures 4 à 6, les rivets sont venus de matière avec le capot 26 formant palier.

Bien entendu, il est possible de réaliser ces rivets à partir de la plaquette isolante 46, par extrusion, de manière à pratiquer dans cette dernière une tige creuse à fond obturé venant s'engager dans un orifice pratiqué dans le capot 26.

Le rivetage est alors réalisé à chaud.

En se référant maintenant à la figure 7, les cages métalliques de guidage sont, quant à elles, fixées sur la plaquette isolante 46 au moyen de rivets 50 conventionnels rapportés ou au moyen de rivets similaires aux rivets décrits précédemment, c'est-à-dire soit respectivement venus de matière avec les cages, soit venus de matière avec la plaquette isolante 46.

Comme on le conçoit, l'ensemble porte-balais qui vient d'être décrit, qui utilise des cages de guidage de balais, ici métalliques, directement fixées sur le capot formant palier de la machine électrique qu'ils sont destinés à alimenter, en utilisant des rivets venus de matière soit avec une plaquette isolante sur laquelle les cages sont fixées, soit avec le capot, permet un assemblage de l'ensemble au moyen de machines automatiques, tout en réduisant les coûts et d'améliorer sensiblement les échanges thermiques entre les cages et le capot.

On obtient en outre une très bonne étanchéité à l'eau dans la mesure où l'on utilise des rivets constitués de tiges à fond obturé.

Bien entendu en variante les cages sont en matière plastique.

On notera cependant que l'invention n'est pas limitée au mode de réalisation décrit.

En effet, dans l'exemple de réalisation décrit précédemment en référence aux figures 3 à 7, les deux balais de retour de courant sont raccordés à la masse par l'intermédiaire de conducteurs connectés au capot 26.

Comme visible sur les figures 8 et 9, sur lesquelles des éléments identiques à ceux des figures 3 à 7 sont désignés par les mêmes références numériques, il est possible de fixer les cages 36 et 38 directement sur le capot 26 au moyen de rivets similaires à ceux décrits précédemment, c'est à dire se présentant par exemple sous la forme de tiges creuses venues de matière soit avec les cages 36 et 38 soit avec le capot 26, de manière à assurer leur fixation mécanique sur le capot 26 et leur raccordement électrique avec ce dernier, les autres cages 40 et 42 étant, quant à elles, fixées comme précédemment décrit, sur la plaquette isolante 46 par rivetage. La plaquette 46 est alors simplifiée.

Bien entendu, ces cages de retour de courant peuvent également être directement soudées sur le capot 26.

On notera enfin qu'il est possible de réaliser chaque rivet selon toute forme appropriée pour l'utilisation envisagée, c'est-à-dire sous la forme d'une tige pleine, de tiges sous forme de griffes.

On va maintenant décrire, en référence aux figures 10 à 12, un autre exemple de réalisation d'un ensemble porte-balais conforme à l'invention.

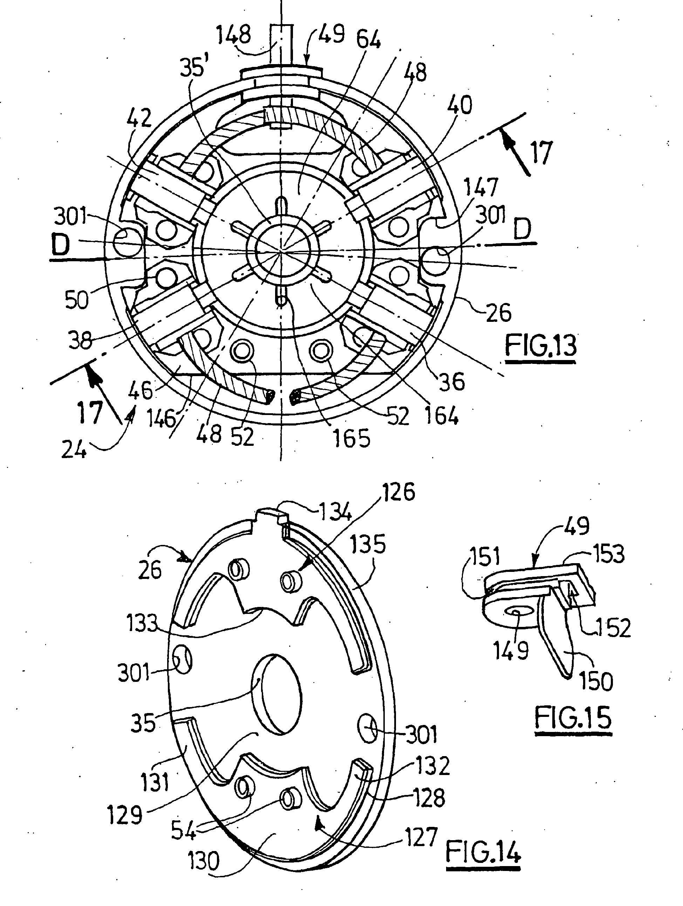

Sur ces figures, des éléments identiques à ceux des ensembles porte-balais décrits précédemment en référence aux figures 3 à 9 portent les mêmes références numériques. Il en est de même dans les figures 13 à 20.

En se référant tout d'abord à la figure 10, comme dans l'exemple de réalisation décrit précédemment, l'ensemble porte-balais comporte un capot métallique 26 formant le palier arrière de la machine électrique, et un ensemble de cages, telles que 38 et 40, destinées chacune à recevoir et à guider un balai, tel que 44, lequel est destiné à venir en contact avec des pistes collectrices d'un collecteur 60 de la machine électrique.

Une partie des cages, ici métallique, est destinée à recevoir des balais négatifs ou de retour de courant, les autres cages étant destinées à recevoir les balais d'alimentation en courant.

Les cages de guidage des balais sont fixées sur le capot 26 au moyen de rivets identiques à ceux décrit précédemment avec interposition, au moins en ce qui concerne les balais d'alimentation, d'une plaquette isolante 46.

En ce qui concerne le capot 26 formant palier, celui-ci est pourvu d'une alvéole centrale 35 de forme générale cylindrique, non débouchante, dans laquelle est destiné à tourillonner l'arbre d'induit 62 de la machine électrique.

L'alvéole 35 est délimitée par une douille 35' décrite ci-après.

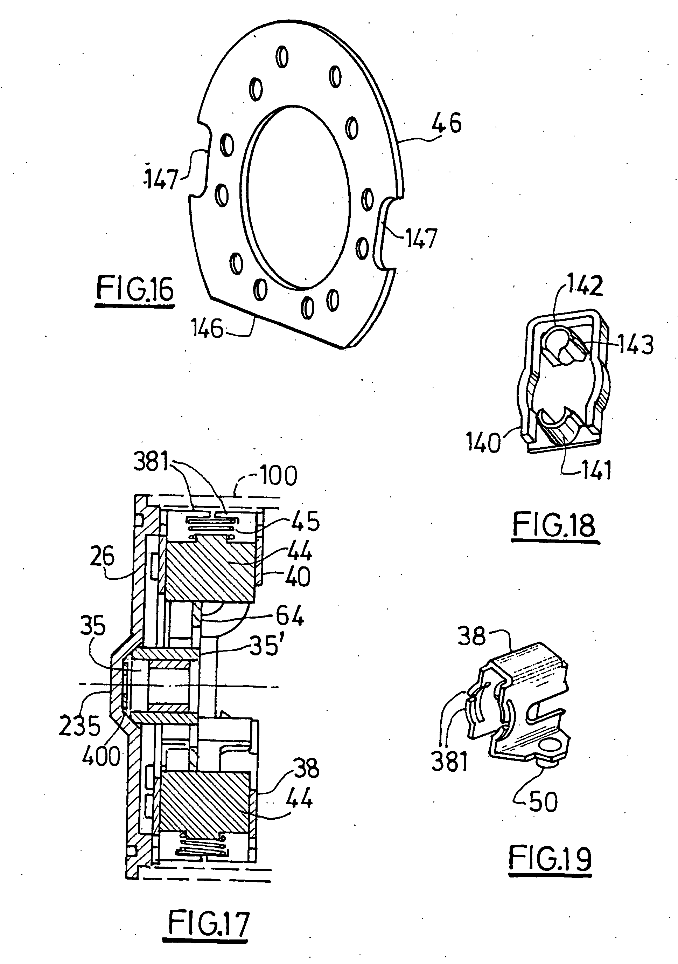

Comme indiqué précédemment, les balais 44 sont insérés dans les cages 38 et 40 avec insertion d'un organe élastique représenté en 45 à la figure 17 sollicitant les balais, en fonctionnement, en appui contre les pistes collectrices du collecteur 60 de la machine électrique tournante.

A l'état non assemblé, visible sur les figures 10, 11 et 17, et en particulier lorsque le collecteur 60 n'est pas encore inséré entre les balais 44, on utilise un organe de limitation du déplacement radial des balais contre lequel ces derniers viennent buter en l'absence de collecteur 60.

Plus particulièrement, et comme mentionné précédemment, cet organe de limitation, désigné par la référence numérique générale 64 se présente sous la forme d'une rondelle, décrite ci-après, insérée entre les balais 44 contre la paroi périphérique de laquelle viennent buter les balais 44.

Le diamètre externe de la rondelle 64 est sensiblement supérieur au diamètre correspondant du collecteur 60 de manière à délimiter un espace suffisant pour permettre l'insertion de ce dernier.

Comme on le voit sur la figure 10, la rondelle 64 vient s'insérer sur le pourtour extérieur de l'alvéole 35 du capot 26, c'est-à-dire sur la douille 35'.

En se référant maintenant aux figures 11 et 12, lors de l'insertion du collecteur 60, celui-ci exerce un effort sur la rondelle 64 tel qu'il déplace cette dernière le long des balais. En fin de course du collecteur 60, c'est-à-dire lorsque celui-ci est complètement inséré entre les balais 44, la rondelle 64 vient se loger dans un dégagement 66 ménagé à cet effet dans le capot 26. Dans cette position, les balais sont libérés de la rondelle 64 et viennent dès lors en appui, sous l'action des moyens élastiques prévus à cet effet, contre les pistes collectrices du collecteur 60 solidaire de l'arbre d'induit 62 de la machine.

De préférence comme à la figure 3, le diamètre interne de la rondelle 64 est choisi pour obtenir un ajustement serré de cette dernière sur la périphérie externe de la douille 35' de l'alvéole 35, dans la position de stockage, afin d'éviter qu'elle ne ballotte dans le logement 66, ce qui serait susceptible d'engendrer des bruits lors du fonctionnement du démarreur. Bien entendu, avant montage, cette rondelle est maintenue par la pression radialement interne exercée par les balais sollicités par les ressorts 45.

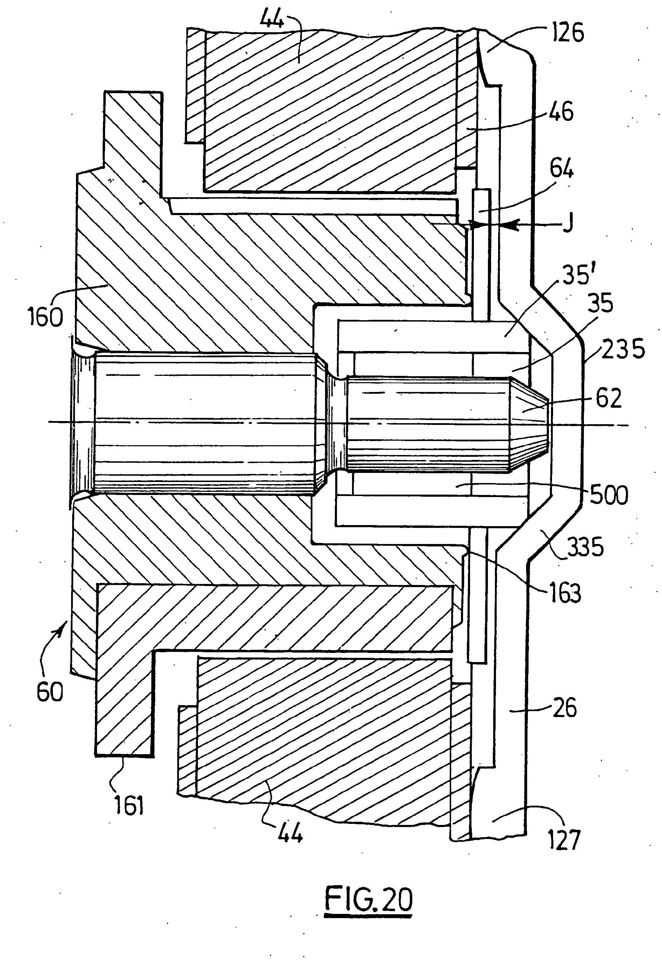

Comme on le conçoit, après montage de la machine électrique, la rondelle 64 constitue une surface contre laquelle vient prendre appui l'extrémité libre du collecteur comme mieux visible à la figure 20. Cette surface peut être utilisée pour freiner rapidement l'induit lors de l'arrêt de la machine électrique. On réduit ainsi considérablement les bruits engendrés au cours de la période de ralentissement. Cette caractéristique est particulièrement avantageuse lorsque la machine électrique est constituée par un démarreur de véhicule automobile, dans la mesure où elle permet de réduire les temps morts entre deux tentatives de démarrage.

On conçoit également que la rondelle 64 peut être utilisée pour réaliser un calage axial de l'induit.

Pour ces applications, on prévoit, de préférence, un organe élastique entre la rondelle 64 et le capot 26 de manière à la solliciter en appui contre le collecteur.

Dans l'exemple de réalisation qui vient d'être décrit, on a considéré que la rondelle 64 est constituée par un organe distinct du capot 26 sur lequel elle vient se monter.

Bien entendu, en particulier dans les cas où le capot 26 est réalisé par moulage d'une matière plastique, la rondelle 64 peut être réalisée sous la forme d'un organe venu de moulage avec le capot 26 et raccordé à ce dernier par des moyens frangibles, par exemple sous la forme de bras adaptés pour être rompus par le collecteur 60 au cours de son insertion.

On notera que l'opération d'assemblage d'une machine électrique pourvue d'un ensemble porte balais selon cet exemple de réalisation est une opération relativement aisée à mettre en oeuvre dans une chaîne de fabrication à haute cadence, dans la mesure où, après rivetage des organes de raccordement électrique des balais sur le capot 26, il convient simplement d'insérer des moyens élastiques dans les cages de guidage, de positionner les balais 44 dans les cages, en appui contre les moyens élastiques, d'insérer la rondelle 64 sur la douille 35' de l'alvéole 35 de manière à écarter les balais suffisamment pour permettre l'insertion du collecteur 60, puis enfin d'insérer le collecteur de manière que l'arbre d'induit 62 s'insère dans l'alvéole 35.

Un palier, référencé en 500 à la figure 20, est interposé radialement entre l'extrémité de l'arbre d'induit et la périphérie interne de la douille 35' pour montage tourillonnant de l'arbre 62 en sorte que le capot constitue le palier arrière de la machine électrique.

Comme indiqué précédemment, au cours de l'insertion du collecteur 60, celui-ci exerce une poussée sur la rondelle 64 jusqu'à ce qu'elle vienne s'engager dans le dégagement 66 et libère les balais qui viennent dès lors en appui contre les pistes collectrices du collecteur.

On procède alors à la fixation proprement dite du capot 26 sur le reste de la machine, à l'aide de tirants, de manière connue en soi.

On notera enfin que l'agencement décrit précédemment en référence aux figures 10 à 12, dans lequel on utilise une rondelle de maintien des balais qui vient se positionner après assemblage du démarreur dans le logement constitue une construction indépendante du type de montage utilisé pour la fixation des organes de raccordement électrique des balais.

Ainsi qu'il ressort à l'évidence de la description et dessins le capot 26, formant palier arrière, présente des surélévations pour la fixation et le support de la plaquette 46 en matière électriquement isolante.

Ces surélévations rigidifient le capot 26, portent les rivets de fixation 52 de la plaquette 46 et définissent des zones planes pour appui et support de la plaquette 46.

Le capot 26 est dans une forme de réalisation obtenu par moulage, notamment lorsqu'il est à base d'aluminium.

Avantageusement le capot 26 est en tôle emboutie en sorte que la réalisation est simple et économique.

En outre cela permet d'alléger le capot 26 et de réduire l'épaisseur de celui-ci ce qui est favorable pour la réduction de l'encombrement axial de la machine électrique, par exemple un démarreur de véhicule automobile.

En effet les surélévations sont obtenues par emboutissage en sorte que le capot 26 présente au niveau de sa face externe des zones creuses. Ces surélévations rigidifient le capot 26, qui peut avoir ainsi une épaisseur réduite favorable pour son emboutissage.

Dans toutes les figures représentées le capot 26 est une pièce de fermeture sans trous en sorte qu'il est étanche.

On appréciera également que les surélévations permettent la création entre elles d'un dégagement référencé en 129 à la figure 7. Ce dégagement permet de créer un espace entre la plaquette 46 et le capot 26.

Grâce à cet espace les rivets 50 de fixation des cages 40,42 métalliques ne viendront pas en contact avec le capot en sorte que tout court-cïrcuit est évité.

Grâce au dégagement 129 un espace de ventilation existe entre la plaquette 46 et le capot 26.

Bien entendu la présente invention n'est pas limitée aux exemples de réalisation décrits.

En particulier on peut conformer le capot 26, de forme annulaire, pour que celui-ci vienne en contact intime avec la carcasse cylindrique de la machine électrique représentée en partie en pointillés en 100 à la figure 12.

C'est à l'intérieur de cette carcasse, de manière connue, qu'est logé l'induit du moteur électrique de la machine électrique dont l'arbre porte la référence 62. La carcasse est réalisée par exemple par roulage d'une tôle et agrafage de celle-ci. Le capot 26 constitue un couvercle de fermeture de la carcasse 100.

Bien entendu il est possible d'optimiser la forme des surélévations.

Ainsi comme visible dans les figures 13,14 le capot 26 présente deux surélévations 126,127 en vis-à-vis s'étendant symétriquement de part et d'autre du diamètre D-D de la figure 13.

Chaque surélévation est obtenue ici par emboutissage du capot 26 en tôle et présente une zone centrale de fixation 130 et deux zones latérales de stabilisation 131,132 s'étendant circonférentiellement de part et d'autre de la zone centrale 130. Les surélévations sont obtenues à la presse par la technique de la semi-découpe.

Les surélévations 126,127 sont dans cette réalisation globalement en forme de croissant avec deux zones latérales 131,132 se raccordant à la périphérie externe de la zone centrale 130.

Les périphéries externe des zones 131,132 prolongent la périphérie externe de la zone centrale 130.

La face supérieure des surélévations 126,127 est plane pour appui et support de la plaquette 46 en matière électriquement isolante, ici en bakelitte.

Chaque zone centrale 130 présente les rivets de fixation 52 de la plaquette 46 venus de matière avec le capot 26 ; chaque rivet 52 présentant une tige 54 venue de matière avec le capot 26 de manière précitée.

Chaque zone centrale 130 est de plus grande étendue radiale que les deux zones latérales 131,132 dites de stabilisation car elles servent uniquement à l'appui de la plaquette 46, tandis que la zone centrale 130 sert à l'appui et à la fixation de la plaquette 46.

Les zones latérales 131,136 sont en forme de secteur annulaire.

La zone centrale 130 a globalement une forme trapézoïdale ; sa périphérie interne 133 étant circulaire pour autoriser le passage de la rondelle 64 de maintien des balais 44.

Le diamètre sur lequel sont implantées les périphéries interne des surélévations 126,127 est donc supérieur au diamètre externe de la rondelle 64.

De même la plaquette 46 présente un alésage central autorisant le passage de la rondelle 64. Le diamètre interne de la plaquette 46 est donc supérieur à celui de la rondelle 64.

Cette rondelle 64 présente à sa périphérie externe une rondelle prolongée radialement vers l'intérieur par une partie centrale fragmentée en languettes 164 à la faveur de fentes 165 borgnes séparant deux à deux les languettes 164. Les fentes 165 sont des fentes radiales, qui débouchent dans l'ouverture centrale de la rondelle 64.

La rondelle 64 présente ainsi une élasticité ce qui permet à celle-ci de venir se serrer, de manière précitée, sur la douille 35' de l'alvéole 35.

Ici comme dans les figures 10 à 12 le capot 26 est embouti centralement pour former une protubérance 235 (figures 17,20) s'étendant en direction opposée aux surélévations 126,127.

Cette protubérance comporte une portée tronconique concave 335 sur laquelle est fixée par soudage l'extrémité chanfreinée de la douille 35', ici métallique. Le soudage peut être réalisé par tout type de soudage, tel que le soudage à l'arc, le soudage par résistance et le soudage par laser.

Le capot 26 présente ainsi une fonction supplémentaire à savoir une fonction de support de la douille 35' délimitant l'alvéole 35. L'alvéole 35 appartient à la partie centrale du capot étanche 26. La portée concave 335 appartient à une paroi tronconique, qui se raccorde à la périphérie interne de la partie périphérique du capot comportant les surélévations.

Cette douille 35' à elle-même une double fonction à savoir une fonction de support de la rondelle 64 à sa périphérie externe et à sa périphérie interne une fonction de support d'un palier 500, ici un palier lisse en variante un palier à aiguille, pour l'extrémité de l'arbre d'induit 62 du moteur électrique de la machine électrique.

Le capot 26 ainsi équipé constitue le palier arrière de la machine électrique.

La plaquette électriquement isolante 46 est de forme simple et économique et présente un méplat 146 et deux évidements 147 ainsi qu'un alésage central pour passage de la rondelle 64.

Comme visible à la figure 13 les évidements 147 sont prévus pour ne pas obturer les trous 301 et autoriser le passage des tirants (non visibles) de fixation du capot 26, constituant le palier arrière. Le méplat 146 permet de dégager la zone centrale 130 de la surélévation 127 pour soudage des extrémités des conducteurs 48 des balais des cages 36,38 de retour de courant à la zone centrale 130 de la surélévation 127 comme visible à la figure 13, les soudages étant représentés en noir.

Les dégagements 147 sont diamétralement opposés. La profondeur des dégagements 147 est fonction du diamètre des trous 301. Les dégagements ont ici une forme en U. La position des trous 301 de part et d'autre du diamètre D-D est due à l'implantation des tirants au niveau du palier avant de la machine électrique.

La plaquette 46 présente également des trous pour le passage des rivets 52 à tige creuse 54 et des rivets 50 ici d'un seul tenant avec les cages 36,38,40,42.

Comme visible à la figure 13 les cages de retour de courant 38,36, implantées ici à 120° l'une par rapport à l'autre, et les cages d'alimentation en courant 40,42, implantées également ici à 120° l'une par rapport à l'autre, sont disposées de part et d'autre du diamètre de symétrie D-D constituant l'axe de symétrie des échancrures 147. Les cages 42 et 38 sont implantées symétriquement de part et d'autre du diamètre D-D avec un décalage angulaire de 60° l'une par rapport à l'autre. Il en est de même des cages 40 et 46.

Ainsi les cages 42 et 36 sont diamétralement opposées et il en est de même des cages 40 et 38. Les axes des cages sont donc disposés en forme de X pour laisser une grande distance circonférentielle entre les deux cages respectivement d'alimentation en courant et de retour de courant afin d'avoir un grand écart entre les rivets 52 d'une même surélévation. Bien entendu selon les applications on peut modifier les angles entre les cages tout en ayant une disposition en forme de X des axes des cages disposées, d'une part, symétriquement par rapport à un diamètre du capot 26, globalement en forme de disque, et d'autre part, circonférentiellement de manière non régulière.

Ces cages métalliques, comme mieux visibles à la figure 19, ont globalement une forme en U avec un fond servant au guidage du patin 44 associé.

Les branches du U sont centralement chacune dotée d'une zone cylindrique pour définition d'un logement cylindrique pour le montage du ressort de rappel 45, ici du type ressort à boudin sollicitant le balai 44 vers le centre. Chaque balai 44, comme mieux visible à la figure 17, présente un téton (non référencé) pour le centrage de l'extrémité inférieure du ressort 45, dont l'extrémité supérieure prend appui sur des pattes de maintien 381 issues des branches des cages.

Plus précisément on monte dans chaque cage le ressort 45 et le balai 44, puis on referme les pattes 381 pour verrouiller le ressort 45 ; la rondelle 64 étant bien entendu en position pour ne pas perdre les balais 44.

Bien entendu l'une des branches de la cage présente une fente borgne (non référencée à la figure 19) pour le passage du conducteur 48 solidaire de chaque balai 44.

Ici deux pattes de maintien 381 du ressort 45 concerné sont prévues par branches.

Les pattes 381 sont dirigées l'une vers l'autre et sont réalisées par découpe à la faveur d'une fente. Les extrémités libres des branches des cages sont prolongées chacune par une aile (non référencée à la figure 19) s'étendant parallèlement au fond de la cage. Les ailes sont destinées à venir en contact avec la plaquette 46 et sont conformées pour présenter les rivets 50 venus ici de matière avec ses ailes. Les ailes sont donc des ailes de fixation des cages et sont obtenues par pliage du fait que les cages sont métalliques.

La nature métallique des cages permet de simplifier celles-ci tout en leur donnant la forme et les fonctions souhaitées. Les cages ont donc une forme simple et économique.

Pour éviter tout court-circuit les cages 40,42 d'alimentation en courant, sont en variante obturées par un capuchon 140 en matière électriquement isolante, ici en matière plastique moulable.

Chaque capuchon 140 recouvre les branches des cages 40,42 au niveau des pattes 381 de celles-ci. Chaque capuchon 140 comporte un fond portant deux demi pions 141,142 dotés chacun de nervures 143 destinées à s'engager à force entre les deux branches des cages de part et d'autre des portions cylindriques de celles-ci, c'est-à-dire de part et d'autre des pattes 381.

Chaque capuchon comporte un rebord périphérique perpendiculaire à son fond. Ce rebord est interrompu au niveau du demi pion 141 destiné à venir en prise localement par ses nervures avec la partie des branches des cages adjacente aux ailes portant les rivets. Les cages 40,42 sont donc ceinturées chacune par le rebord du capuchon 140 se montant ainsi par encliquetage dans les cages présentant une élasticité pour obturer radialement la partie supérieure de celles-ci.

On appréciera que la plaquette isolante 46 offre un appui aux balais et supporte les cages.

L'autre surélévation 126 est prolongée vers l'extérieur par une patte 134 s'étendant radialement en saillie par rapport à la périphérie externe 135 du capot 26, globalement en forme de disque annulaire. C'est sur cette patte 134 que se monte le passe-fil 49 globalement en forme d'équerre. Pour ce faire le passe-fil 49 (figure 15) présente une aile supérieure 153 prolongée par une portion (non référencée) présentant un trou 152 destiné à s'engager de manière complémentaire sur la patte 134 de section rectangulaire comme le trou 152.

Grâce au trou 152 le passe-fil 49 est fixé sur le capot 26, sachant que son autre aile 150, perpendiculaire à l'aile supérieure 153, est destinée à venir en contact avec la face supérieure de la plaquette 46.

Cette aile 150, suivant une caractéristique, est allongée circonférentiellement pour recouvrir les deux rivets de fixation 52 venus de matière avec le capot 26. Ainsi on évite tout court-circuit entre les rivets 52 et les conducteurs 48 des cages 40,42. Ces deux conducteurs 48 sont fixés, par exemple par soudage, sur un élément de liaison 148 électriquement conducteur traversant un trou 149 de passage prévu dans l'aile supérieure 153 à extrémité libre arrondie. Le bord de l'aile 153 est pourvu d'une rainure 151 pour montage du passe-fil sur le bord d'une échancrure réalisée à l'extrémité de la carcasse ou culasse 100 métallique. La hauteur de la rainure 151 est fonction de l'épaisseur de la carcasse 100. L'échancrure de la carcasse 100 a une forme complémentaire à celle du fond de la rainure 151.

Ainsi l'aile 153 ferme de manière étanche l'échancrure de la carcasse, présentant donc un fond arrondi, du fait que les flancs de sa rainure recouvrent la carcasse.

Le passe-fil 49 se monte donc par enfilage axial sur la carcasse 100, avantageusement avec serrage. Le passe-fil 49, en matière électriquement isolante, souple et déformable, telle que de l'élastomère ou du caoutchouc assure, outre des fonctions d'isolation électrique, des fonctions de fixation ; la rainure 151 se montant à serrage sur la carcasse 100, le trou 152 se montant à serrage sur l'extrémité libre de la patte 134, tandis que la pièce de liaison 148 traverse à serrage le trou 149.

Du fait de ces serrages, on obtient de bonne étanchéité.

Le passe-fil 49 est donc également une pièce d'étanchéité.

On appréciera que la périphérie externe 128, de forme annulaire, des surélévations 126,127 s'étend légèrement radialement en dessous de la périphérie externe 135 du capot 26. Le diamètre de la périphérie externe 135 du capot est donc légèrement supérieur à celui de la périphérie externe des surélévations 126,127.

Cette différence de diamètre est fonction de l'épaisseur de la carcasse 100 de façon que la carcasse vienne en appui sur le capot 26 au-delà de la périphérie externe 128 comme visible à la figure 17.

La périphérie externe 128 des surélévations est en contact intime avec la périphérie interne de la carcasse comme visible dans cette figure 17.

La périphérie externe 128 de surélévation, globalement de forme cylindrique, compte tenu de la hauteur des surélévations 126,127, définit donc un diamètre de centrage sur la culasse 100.

Le capot se monte donc à centrage sur la culasse 100 en s'emboîtant dans celle-ci. Bien entendu les bords des surélévations sont rayonnés comme visible à la figure 14 du fait que celles-ci sont obtenues par emboutissage.

Dans cette figure 14 la douille 35' n'est pas encore fixée sur le capot 26.

Dans les figures 13 à 20 l'épaisseur des surélévations est supérieure à l'épaisseur de la rondelle 64 en sorte que la présence du dégagement 66 des figures 10 à 12 n'est pas nécessaire, le dégagement 129 entre les surélévations réalisant cette fonction. Bien entendu on peut prévoir une rondelle de butée pour l'extrémité de l'arbre d'induit 62 comme visible en 400 à la figure 17. Dans ce cas la rondelle 400 est montée dans le fond de la protubérance 235.

Le montage est réalisé comme dans les figures 10 à 12, la figure 17 représentant l'ensemble porte-balais avant montage du collecteur et la figure 20 représentant la position juste après insertion complète du collecteur entre les balais.

Ce collecteur 60 présente des pistes électriquement 161 conductrices portées par un support 160 en matière électriquement isolante.

Le support 160 est classiquement en matière plastique, son alésage interne étant étagé en diamètre, comme visible à la figure 20, pour le logement de la douille 35' ; l'extrémité libre de l'arbre d'induit 62 étant de diamètre réduit pour son montage à rotation dans le palier 500 porté intérieurement par la douille 35'. Le support 160 est solidaire de l'arbre d'induit 62 de manière connue.

Selon une caractéristique le support 160 présente à son extrémité libre une collerette 163 d'orientation axiale, ici venue de matière avec le support 160 par moulage.

La collerette 163 est implantée à la périphérie interne du support 160 et donc du collecteur 60.

La collerette 163 prolonge l'alésage interne du support 160 et est en variante fractionnée en secteurs annulaires par des fentes favorisant la ventilation.

Ici la collerette 163, de forme annulaire, est de faible longueur axiale en sorte qu'elle a la forme du bourrelet de forme annulaire.

L'extrémité libre de la collerette est de forme arrondie pour contact local avec la rondelle 64.

Ici la collerette a une forme de godron. Lors du montage le collecteur 60 vient donc pousser sur la rondelle 64 de maintien des balais 44 sur la périphérie interne de celle-ci en sorte que celle-ci ne risque pas de basculer.

Le godron 163 vient donc en contact avec les languettes 164 de la rondelle pour déplacer axialement la rondelle 64 montée à serrage sur la douille 35'.

Aucun basculement n'est donc à craindre.

En final, après montage sur la carcasse 100, un jeu J existe entre la rondelle 64 et le capot 26 et le godron 163 est en contact avec la rondelle 64. Ce jeu évite une transmission directe de chaleur entre le capot 26 et la rondelle 64 en ménageant un espace de ventilation entre ceux-ci. En outre cela permet de s'affranchir des tolérances de fabrication et une libération des balais 44 après montage de la machine.

Lorsque le moteur électrique de la machine s'arrête on a donc un freinage de l'arbre d'induit grâce au godron en contact avec la rondelle 64.

Un dispositif de freinage de l'arbre est réalisé. On tire parti du montage à serrage de la rondelle 64.

Le godron 163 a une double fonction et constitue donc à la fois un outil de déplacement axial de la rondelle 64 pour libération des balais 44 et un organe de freinage de l'arbre 62 solidaire de celui-ci.

Bien entendu on peut inverser les structures. Par exemple la protubérance 235 peut être dirigée vers le collecteur 60 et la portée tronconique de la douille 35' être réalisée à la périphérie interne de celle-ci. Dans ce cas il faut prévoir un dégagement de réception de la rondelle comme visible en 66 dans les figures 10 à 12.

La collerette 163 peut être plus longue axialement.

La hauteur des surélévations 126,127 dépend des applications celles-ci délimitant un dégagement pour loger au moins en partie la rondelle 64 après montage de la machine.

La zone centrale 130 peut être prolongée afin de supprimer les zones latérales associées aux cages 36,38 reliées à la masse lorsque ces cages sont fixées directement sur le capot comme visible à la figure 9.

L'une des surélévations peut donc être dépourvue d'ailes latérales.

Ici les cages 40,42 sont avantageusement côte à côte. Bien entendu, en variante, elles peuvent être diamétralement opposées. Dans ce cas il faut prévoir deux passe fils.

En liaison avec le mode de fixation de la figure 9, on voit que chaque surélévation peut ne comporter qu'une zone latérale de plus faible hauteur que l'autre zone de fixation.

On appréciera que la rondelle 64 de limitation du déplacement radial des balais est d'un emploi universel et s'applique donc également aux solutions décrites dans les pages 1 et 2 de la description.

Il en est de même de la collerette 163 et des surélévations 126,127 créant un dégagement pour les organes de fixation des cages à la plaquette 46.

Bien entendu la machine électrique peut être un actionneur pour la commande des balais d'essuyage d'un véhicule automobile ou pour la commande du ventilateur de refroidissement du véhicule. En variante la rondelle est solidaire à sa périphérie interne d'un manchon monté à serrage sur la périphérie externe de la douille 35' en sorte que l'organe de limitation des balais avant montage de la machine peut avoir différentes formes.

Dans le cas ou cet organe comporte un manchon le serrage est obtenu dans une forme de réalisation à l'aide de joints montés dans des gorges du manchon et venant se serrer sur la douille 35'. En variante le manchon, avantageusement en matière plastique, est doté à ses extrémités axiales de languettes venant se serrer sur la douille 35', qui appartient au capot 26.

En variante la périphérie externe de la douille 35' présente des crans ou un moltage pour montage à force de la rondelle 64 alors avantageusement dépourvue de languettes et moins dure que la douille.

Dans tous les cas le serrage est déterminé pour autoriser un déplacement axial de l'organe de limitation 64 comprenant avantageusement une rondelle.

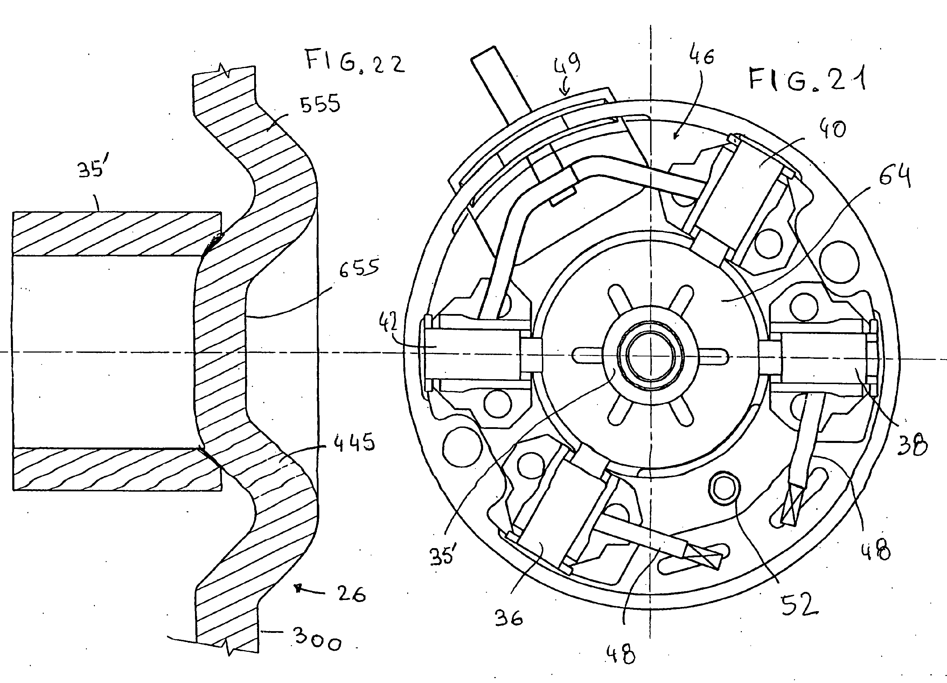

En variante la surélévation 127 porte centralement un seul rivet 52 (figure 21) et deux bossages 227 de forme oblongue disposés de manière symétrique par rapport au rivet 52 précité. La plaquette 46 présente alors, au niveau de la surélévation 127, à sa périphérie interne un contour en forme de V pour créer un dégagement pour les bossages 227 servant au soudage précis des extrémités dénudées, schématisés par des croix, des conducteurs 48.

A la figure 20 la douille 35' est chanfreinée extérieurement pour coopérer à centrage avec la portée 335. En variante (FIGURE 22) cette portée tronconique 445 est convexe en sorte que la douille 35' est chanfreinée intérieurement pour coopérer à centrage avec cette portée 445 pour être soudée de manière plus résistante sur celle-ci. Cette disposition conduit à augmenter la longueur de la culasse. Pour palier cet inconvénient la portée 445 se raccorde à la périphérie interne300 de la partie périphérique du capot 26 par l'intermédiaire d'une portée tronconique concave 555. Les portées 445, 555 appartiennent à des parois tronconiques inclinées en sens inverse et délimitant, vue de l'extérieur un bourrelet annulaire à sommet arrondi et à flancs inclinés et vue de l'intérieur une gorge annulaire à flancs inclinés et à fond arrondi. Le fond 655 de la protubérance, délimité par la portée 445, est ici dans le plan de la périphérie interne 300 de la partie périphérique du capot étanche 26. En variante le fond 655 s'étend en saillie ou en retrait par rapport à cette périphérie interne. Grâce à cette disposition la soudure de la douille est résistante tout en augmentant moins la longueur axiale de la carcasse qu'avec une solution à portée uniquement convexe. La solution de la figure 22 conduit à une double opération d'emboutissage.

## Revendications

1. Ensemble porte-balais pour machine électrique, comprenant un capot métallique (26) formant palier destiné à être monté sur une carcasse de la machine et un ensemble d'organes (28, 30, 32, 34) de raccordement électrique des balais montés sur le capot (26) au moyen de rivets (50, 52) qui comportent chacun au moins une tige (54) s'étendant à partir de l'une des pièces constituées par le capot (26) et l'un desdits organes (28, 30, 32, 34), traversant un orifice pratiqué dans l'autre pièce et rabattu contre cette dernière, **caractérisé en ce que** ladite tige (54) est venue de matière avec la pièce à partir de laquelle elle s'étend et comporte une base (56) obturée.

2. Ensemble porte-balais selon la revendication 1, **caractérisé en ce que** ladite tige (54) est une tige creuse.

3. Ensemble porte-balais selon la revendication 1, **caractérisé en ce que** la tige (54) est constituée par une partie extrudée de la pièce à partir de laquelle elle s'étend.

4. Ensemble porte-balais selon la revendication 1, **caractérisé en ce qu'**au moins une partie des organes de guidage et de raccordement électrique desdits balais comportent des cages de guidage (40, 42) électriquement conductrice adaptées pour recevoir des balais (44) respectifs, chaque cage de guidage étant solidaire d'une plaquette (46) en matériau électriquement isolant fixée sur le capot (26) au moyen desdits rivets (52).

5. Ensemble porte-balais selon la revendication 4, **caractérisé en ce que** chaque cage de guidage (40, 42) est rivetée sur la plaquette isolante (46).

6. Ensemble porte-balais selon la revendication 4, **caractérisé en ce que** le capot (26) présente des surélévations (126,127) pour le montage de la plaquette (46).

7. Ensemble porte-balais selon la revendication 6, **caractérisé en ce que** les surélévations (126,127) présentent au moins une zone de fixation (130) de la plaquette (46) et une zone latérale (131,132) de plus faible étendue radiale pour créer un dégagement (129) permettant la fixation d'au moins une cage de guidage.

8. Ensemble porte-balais selon la revendication 7 **caractérisé en ce que** les surélévations présentent deux zones latérales (131,132) s'étendant de part et d'autre d'une zone centrale de fixation (130) de la plaquette, et **en ce que** les zones latérales se raccordent à la périphérie externe de la zone centrale (130) en ayant une étendue radiale moindre que la zone centrale (130).

9. Ensemble porte-balais selon la revendication 8, **caractérisé en ce que** l'une des surélévations (126,127) est prolongée par une patte (134) de montage d'un passe fil (49).

10. Ensemble porte-balais selon la revendication 4, **caractérisé en ce que** les cages de guidage sont pourvues intérieurement de moyens élastiques sollicitant, en fonctionnement, les balais radialement en appui contre un collecteur de la machine électrique, **en ce qu'**il comporte un organe (64) formant butée de limitation du déplacement radial des balais en l'absence de collecteur et **en ce que** le capot (26) porte centralement une douille 35') sur la périphérie externe de laquelle est monté à serrage l'organe (64).

## Claims

1. Brush-holder assembly for an electric machine, comprising a metal cover (26) which forms a bearing which is designed to be fitted on a machine housing and a set of units (28, 30, 32, 34) for electrical connection of the brushes which are fitted on the cover (26) by means of rivets (50, 52) which each comprise at least one rod (54) which extends from one of the parts constituted by the cover (26) and one of the said units (28, 30, 32, 34), and passes through an aperture which is provided in the other part, and is folded back against the latter, **characterised in that** the said rod (54) is integral with the part from which it extends, and comprises a closed base (56).

2. Brush-holder assembly according to claim 1, **characterised in that** the said rod (54) is a hollow rod.

3. Brush-holder assembly according to claim 1, **characterised in that** the rod (54) consists of an extruded portion of the part from which it extends.

4. Brush-holder assembly according to claim 1, **characterised in that** at least some of the guiding and electrical connection units of the said brushes comprise electrically conductive guide cages (40, 42) which are designed to receive respective brushes (44), each guide cage being integral with a plate (46) made of electrically insulating material which is secured to the cover (26) by means of the said rivets (52).

5. Brush-holder assembly according to claim 4, **characterised in that** each guide cage (40, 42) is riveted onto the insulating plate (46).

6. Brush-holder assembly according to claim 4, **characterised in that** the cover (26) has raised parts (126, 127) for fitting of the plate (46).

7. Brush-holder assembly according to claim 6, **characterised in that** the raised parts (126, 127) have at least one area (130) for securing of the plate (46) and a lateral area (131, 132) with a smaller radial extent, in order to create an undercut (129) which makes possible securing of at least one guide cage.

8. Brush-holder assembly according to claim 7, **characterised in that** the raised parts have two lateral areas (131, 132) which extend on both sides of a central securing area (130) of the plate, and **in that** the lateral areas are connected to the outer periphery of the central area (130), and have a radial extent which is smaller than the central area (130).

9. Brush-holder assembly according to claim 8, **characterised in that** one of the raised parts (126, 127) is extended by a lug (134) for fitting of a feed-through sleeve (49).

10. Brush-holder assembly according to claim 4, **characterised in that** the guide cages are provided on their interior with resilient means which in operation thrust the brushes radially such that they are supported against a collector of the electric machine, **in that** it comprises a unit (64) which forms a stop to limit the radial displacement of the brushes in the absence of the collector, and **in that** the cover (26) bears in its centre a bush (35') on the outer periphery of which the unit (64) is clamped.

## Patentansprüche

1. Burstenträgereinhest für eine elektrische Maschine mit einer als Lagerschild dienenden Metallkappe (26), die für die Anbringung an einem Gehäuse der Maschine bestimmt ist, und einer Gruppe von Organen (28, 30, 32, 34) für den elektrischen Anschluss der Kohlebürsten, die an der Kappe (26) mittels Nieten (50, 52) befestigt sind, die jeweils mindestens einen Schaft (54) umfassen, der sich ausgehend von einem der Elemente, die aus der Kappe (26) und einem der besagten Organe (28, 30, 32, 34) bestehen, erstreckt, durch eine Öffnung hindurchgeht, die in das andere Element eingearbeitet ist, und gegen Letzteres umgebördelt ist, **dadurch gekennzeichnet , dass** der besagte Schaft (54) einstückig mit dem Element ausgeführt ist, von dem aus er sich erstreckt, und eine verschlossene Basis (56) aufweist,

2. Bürstenträgereinheit nach Anspruch 1, **dadurch gekennzeichnet, dass** der besagte Schaft (54) ein Hohlschaft ist.

3. Bürstenträgerehheit nach Anspruch 1, **dadurch gekennzeichnet, dass** der Schaft (54) aus einem extrudierten Teil des Elements besteht, von dem aus er sich erstreckt.

4. Burstentragereinheit nach Anspruch **1, dadurch gekennzeichnet, dass** mindestens ein Teil der Organe für die Führung und den elektrischen des besagten Kohlebürsten elektrisch leitende Führungskäfige (40, 42) umfasst, die für die Aufnahme entsprechender Kohlebürsten (44) geeignet sand, wobei jeder Führungskäfig fest mit einer Platte (46) aus elektrisch nichtleitendem Material verbunden die mittels der besagten Nieten (52) an der Kappe (26) befestigt list.

5. Bürstenträgereinheit nach Anspruch 4, **dadurch gekennzeichnet dass** jeder Fuhrungskäfig (40, 42) an der nichtleitenden Platte (46) angenietet ist.

6. Bürstenträgereinheit nach Anspruch 4, **dadurch gekennzeichnet, dass** die Kappe (26) Erhebungen (126, 127) für die Anbringung der Platte (46) aufweist.

7. Bürstenträgereinheit nach Anspruch 6, **dadurch gekennzeichnet, dass** die Erhebungen (126, 127) mindestens einen Befestigungsbereich (130) zur Befestigung der Platte (46) und einen Seitenbereich (131, 132) mit geringerer radialer Ausdehnung aufweisen, um einen Absatz (129) zu schaffen, der die Befestigung mindestens eines Führungskäfigs ermöglicht,

8. Burstenträgereinheit nach Anspruch 7, **dadurch gekennzeichnet, dass** die Erhebungen zwei Seitenbereiche (131, 132) aufweisen, die sich beiderseits eines mittleren Befestigungsbereichs (130) zur Befestigung der Platte erstrecken, und dass sich die Seitenbereiche an den außeren Umfang des Mittelbereichs (130) anschließen, wobei sie teine geringere radiale Ausdehnung als der Mittelbereich (130) aufweisen.

9. Bürstenträgereinheit nach Anspruch 8, **dadurch gekennzeichnet, dass** eine der Erhebungen (126, 127) durch einen Ansatz (134) für die Anbringung einer Durchgangstülle (49) verlängert wird.

10. Bürstenträgereinheit nach Anspruch 4, **dadurch gekennzeichnet, dass** die Führungskäfige innen mit elastischen Mitteln versehen sind, die während des Betriebs die Kohlebürsten radial in Anlage gegen einen Kollektor der elektrischen Maschine beaufschlagen, das s sie ein Organ (64) umfasst, das als Anschlag zur Begrenzung der radiale Bewegung der Kohiebürsten bei Nichtvorhandensein eines Kollektors dient, und daß s die Kappe (26) mittig eine Hülse (35') trägt, an deren äußerem Umfang das Organ (64) festgespannt angebracht ist.
